# EUROPÄISCHE PATENTSCHRIFT

(11) **EP 3 611 353 B1**
(45) Veröffentlichungstag und Bekanntmachung des Hinweises auf die Patenterteilung: **06.01.2021**
(21) Anmeldenummer: 19184006.5
(22) Anmeldetag: 12.07.2017
(51) Int. Cl.: F01M 1/18, F01P 3/06, F01P 7/14, F01M 5/00, F16K 31/06

(54) **STEUERVENTIL ZUR VERSORGUNG EINER ODER MEHRERER DÜSEN MIT EINEM DRUCKFLUID**
CONTROL VALVE FOR SUPPLYING ONE OR MORE NOZZLES WITH A PRESSURIZED FLUID
SOUPAPE DE COMMANDE DESTINÉE À ALIMENTER UNE OU UNE PLURALITÉ DE BUSES EN FLUIDE SOUS PRESSION

(30) Priorität: 14.07.2016 DE 102016113003
(43) Veröffentlichungstag der Anmeldung: 19.02.2020
(62) Teilanmeldung aus: 17180999.9
(73) Patentinhaber: Wagner GmbH & Co. KG, 36043 Fulda (DE)
(72) Erfinder: Reinhard, Manuel, 36093 Künzell (DE)
(74) Vertreter: SSM Sandmair

(56) Entgegenhaltungen:
- DE-A1- 4 231 998
- DE-A1-102004 031 286
- DE-C2- 2 546 273
- DE-U1-202012 003 969
- FR-A1- 2 877 709

## Beschreibung

Die Erfindung betrifft ein Steuerventil zur Versorgung einer oder mehrerer Düsen mit einem Druckfluid, beispielsweise zur Versorgung einer oder mehrerer Kühldüsen zur Sprühkühlung einer oder mehrerer Komponenten einer Brennkraftmaschine. Das Druckfluid dient in derartigen Verwendungen als Kühlfluid zur konvektiven Kühlung der jeweiligen Komponente. Das Steuerventil kann insbesondere zur Versorgung einer oder mehrerer Kühldüsen zur Sprühkühlung eines oder mehrere Kolben eines Verbrennungsmotors eines Kraftfahrzeugs dienen. Gegenstand der Erfindung ist auch ein Kühlsystem, dass zumindest das Steuerventil und eine oder mehrere an das Steuerventil angeschlossene Kühldüsen beinhaltet.

Zur Kühlung von Kolben von Verbrennungsmotoren wird ein Kühlfluid, typischerweise vom Schmierölkreis des Verbrennungsmotors abgezweigtes Schmieröl, mittels Düsen gegen die Unterseiten der Kolben gesprüht. Der Zustrom des Kühlfluids zu den Düsen wird mit einem oder mehreren Ventilen gesteuert. Den Düsen kann jeweils ein eigenes Ventil zugeordnet sein. Der Zustrom zu mehreren Düsen kann auch mit einem für die Düsen gemeinsamen Ventil gesteuert werden. Um einen großen Volumenstrom mit einer möglichst kleinen Steuerkraft zu steuern, werden die Steuerventile mit einem Hauptventil im Zustrom zu den Düsen und einer Vorsteuereinrichtung zur Steuerung des Hauptventils ausgeführt.

Ein Steuerventil mit vorgesteuertem Hauptventil ist beispielsweise aus der US 2014/0264101 A1 bekannt. Das Steuerventil weist ein als Sitzventil ausgeführtes Hauptventil mit einem in einer Hauptleitung angeordneten Ventilkolben auf, der in beide axiale Richtungen seiner Beweglichkeit mit Druckfluid beaufschlagt wird. Die mit dem Druckfluid in Berührung kommenden Stirnflächen des Ventilkolbens sind so bemessen, dass der Ventilkolben bei gleichem Druck an beiden Stirnseiten in Schließposition in einen Ventilsitz gedrückt wird. In der Schließposition unterbricht der Ventilkolben die Hauptleitung und somit den Zustrom zu den Düsen. In der Schließposition wirkt das Druckfluid vom Druckanschluss des Steuerventils auf die dem Ventilsitz zugewandte Vorderseite des Ventilkolbens. Die auf den Ventilkolben ausgeübte Kraft ergibt sich aus dem Druck des Druckfluids und dem Strömungsquerschnitt des Ventilsitzes, der vom Ventilkolben in der Schließposition verschlossen wird. Der Ventilkolben begrenzt mit seiner Rückseite eine Steuerkammer. Ein in der Steuerkammer herrschender Steuerdruck wirkt in Richtung auf die Schließposition auf den Ventilkolben. Um den Steuerdruck zu erzeugen, weist die Steuerkammer einen durch den Ventilkolben führenden Einlass auf, durch den Druckfluid vom Druckanschluss in die Steuerkammer strömt. Die Steuerkammer weist ferner einen Auslass mit einem Vorsteuerquerschnitt auf, dessen Größe mittels eines Vorsteuerorgans verändert werden kann. Das Vorsteuerorgan ist mittels einer Elektromagneteinrichtung zwischen einer den Vorsteuerquerschnitt sperrenden ersten Vorsteuerposition und einer freigebenden zweiten Vorsteuerposition hin und her bewegbar. Als Vorsteuerorgan dient ein Anker der Elektromagneteinrichtung oder ein mit dem Anker axial unbeweglich verbundener Ventilstößel, der in der Schließposition axial gegen einen Ventilsitz der Vorsteuereinrichtung drückt, der den Vorsteuerquerschnitt bildet. Auf Grund der Beweglichkeit des Vorsteuerorgans bildet sich am Außenumfang des Vorsteuerorgans ein Spalt, durch den Druckfluid in die Elektromagneteinrichtung dringen kann. Dies kann bei den relativ zueinander beweglichen Teilen der Elektromagneteinrichtung und beim nadelförmigen Vorsteuerorgan aufgrund von im Druckfluid enthaltenen Feststoffpartikeln zu Reibverschleiß führen.

Um die Düsen mit dem Druckfluid zu versorgen, bewegt die Elektromagneteinrichtung das Vorsteuerorgan aus der Schließposition, so dass der Vorsteuerquerschnitt freigegeben wird und das Druckfluid aus der Steuerkammer abströmen kann. Aufgrund des hierdurch verringerten Steuerdrucks hebt der Ventilkolben vom Ventilsitz ab und gibt die Hauptleitung zu den Düsen frei. Eine Fehlfunktion der Elektromagneteinrichtung, beispielsweise aufgrund eines Defekts in der Stromversorgung, hat andererseits zur Folge, dass der Ventilkolben schon bei geringem Druck am Druckanschluss wegen des fehlenden Steuerdrucks in einer Druchflussposition verharrt. Die Düsen werden bei solch einer Fehlfunktion mit Druckfluid versorgt, dessen Druck für eine Sprühkühlung nicht ausreicht, so dass Druckfluid über die Düsen nutzlos abströmt. Handelt es sich bei dem Druckfluid um Schmieröl für den Motor eines Fahrzeugs, treten derartige Situationen typischerweise im Leerlauf des Motors auf, da das Schmieröl dann von der vom Motor angetriebenen Schmierölpumpe mit vergleichsweise geringem Druck gefördert wird. Durch das Abströmen des Schmieröls über die Düsen sinkt der Druck im Schmierölkreis, so dass die Versorgung von Schmierstellen gefährdet sein kann. Um diese zu verhindern, ist Steuerventilen der bekannten Art typischerweise ein Rückschlagventil zentral für mehrere Düsen oder pro Düse jeweils ein Rückschlagventil nachgeordnet. DE 42 31 998 offenbart ein weiteres Beispiel eines Gattungsgemäßen Ventils. Es ist eine Aufgabe der Erfindung, ein Steuerventil mit verringertem Verschleiß und Druckfluidverbrauch zu schaffen. Die Aufgabe wird gelöst durch die Merkmale des Anspruchs 1.

Die Erfindung geht von einem Steuerventil aus, das einen Druckanschluss für ein Druckfluid, das heißt für ein unter Druck stehendes Fluid, einen Arbeitsanschluss für die Abführung des Druckfluids zu einer oder mehreren Düsen und einen primären Steuerquerschnitt aufweist, durch den das Druckfluid vom Druckanschluss zum Arbeitsanschluss strömen kann. Das Steuerventil umfasst ein Hauptventil mit einem mit dem Druckfluid beaufschlagbaren Ventilkolben, der zur Veränderung der Größe des primären Steuerquerschnitts zwischen einer Minimalflussposition und einer Maximalflussposition axial hin und her beweglich ist. Nimmt der Ventilkolben die Minimalflussposition ein, kann nur ein minimaler Strom des Druckfluids durch den primären Steuerquerschnitt strömen. Ist die Minimalflussposition wie bevorzugt eine Schließposition, schließt bzw. sperrt der Ventilkolben in der Minimalflussposition den primären Steuerquerschnitt, so dass durch den primären Steuerquerschnitt kein Druckfluid strömen kann. Bei in Maximalflussposition befindlichem Ventilkolben ist der primäre Steuerquerschnitt maximal groß. Bevorzugt gibt der Ventilkolben in der Maximalflussposition den primären Steuerquerschnitt vollkommen frei.

Eine Steuerkammer des Steuerventils weist zur Erzeugung eines auf den Ventilkolben axial wirkenden Steuerdrucks einen Einlass und zur Verringerung des Steuerdrucks einen Auslass für das Druckfluid auf. Um den in der Steuerkammer herrschenden Steuerdruck steuern zu können, weist vorzugsweise der Auslass einen der Größe nach veränderbaren Vorsteuerquerschnitt auf. Der Einlass kann ebenfalls einen der Größe nach veränderbaren Strömungsquerschnitt aufweisen, erforderlich ist dies jedoch nicht. In alternativen Ausführungen weist der Einlass den der Größe nach veränderbaren Vorsteuerquerschnitt auf, während der Auslass als Drossel gestaltet ist, um bei maximal geöffnetem Vorsteuerquerschnitt den Steuerdruck in der Steuerkammer aufbauen zu können. In bevorzugten Ausführungen wird jedoch der Auslass gesteuert und die Steuerkammer ist über den Einlass ständig mit dem Druckanschluss verbunden. Der den Einlass umfassende Strömungspfad vom Druckanschluss zur Steuerkammer kann über seine gesamte Länge einen konstanten Strömungsquerschnitt aufweisen oder aus mehreren Strömungsabschnitten mit unterschiedlichen, aber unveränderlichen Strömungsquerschnitten zusammengesetzt sein.

Das Steuerventil umfasst ferner eine Vorsteuereinrichtung mit einem Vorsteuerorgan und einer Elektromagneteinrichtung. Das Vorsteuerorgan ist zur Veränderung der Größe des Vorsteuerquerschnitts zwischen einer ersten Vorsteuerposition und einer zweiten Vorsteuerposition hin und her beweglich, vorzugsweise axial, und kann mittels der Elektromagneteinrichtung in die erste Vorsteuerposition bewegt werden.

In bevorzugten Ausführungen sind die erste Vorsteuerposition eine Minimalflussposition und die zweite Vorsteuerposition eine Maximalflussposition. Nimmt das Vorsteuerorgan die Minimalflussposition ein, ist der Vorsteuerquerschnitt minimal. Steuert das Vorsteuerorgan den Auslass, kann das Druckfluid nicht oder nur langsam aus der Steuerkammer abströmen so dass der Steuerdruck dem am Druckanschluss herrschenden Druck des Druckfluides näher kommt als bei in Maximalflussposition befindlichem Vorsteuerorgan. Zweckmäßigerweise ist die Minimalflussposition des Vorsteuerorgans eine Schließposition, in der das Vorsteuerorgan den Vorsteuerquerschnitt verschließt, so dass bei Anordnung des Vorsteuerorgans am oder im Auslass kein Druckfluid durch den Auslass aus der Steuerkammer strömen kann und der Steuerdruck zumindest im Wesentlichen dem Druck des Druckfluids am Druckanschluss entspricht. Nimmt das Vorsteuerorgan die Maximalflussposition ein, ist der Vorsteuerquerschnitt, d. h. die Größe des Vorsteuerquerschnitts, maximal. Steuert das Vorsteuerorgan den Auslass, kann das Druckfluid mit vergleichsweise geringem Strömungswiderstand aus der Steuerkammer strömen. In der Folge fällt der Steuerdruck.

Der Ventilkolben kann dem Steuerdruck entgegenwirkend mit Druckfluid vom Druckanschluss, also mit dem am Druckanschluss herrschenden Druck, beaufschlagbar sein und/oder mit der Federkraft einer Ventilfeder beaufschlagt werden. In bevorzugten Ausführungen ist der Ventilkolben in eine Richtung seiner Bewegbarkeit mit dem Druckfluid vom Druckanschluss und in die Gegenrichtung mit dem Steuerdruck beaufschlagbar, und zusätzlich wirkt in die Gegenrichtung, den Steuerdruck unterstützend, eine Ventilfeder auf den Ventilkolben.

Nach einem Ausführunqsbeispiel der Erfindung wird die Vorsteuereinrichtung mittels einer mit dem Vorsteuerorgan gekoppelten Membran verwirklicht, die mit dem Druckfluid beaufschlagbar und bei Beaufschlagung mit dem Druckfluid gegen eine Rückstellkraft verformbar ist. Das Vorsteuerorgan ist mit der Membran so gekoppelt, dass ein gegen die Rückstellkraft erfolgendes Verformen der Membran eine Bewegung des Vorsteuerorgans in Richtung auf die zweite Vorsteuerposition bewirkt. Die Membran kann insbesondere gegen eine elastische

Rückstellkraft verformbar sein. Eine elastische Rückstellkraft kann mittels einer pneumatischen oder vorzugsweise einer mechanischen Feder, insbesondere einer Schraubendruckfeder, erzeugt werden. Die Membran kann als solche elastisch dehnbar sein, um die elastische Rückstellkraft gänzlich oder zu einem Teil zu erzeugen. Im Falle einer elastischen Verformbarkeit der Membran kann die Membran in Kombination mit einer pneumatischen oder mechanischen Feder die Rückstellkraft erzeugen. In bevorzugten Ausführungen wird die elastische Rückstellkraft zu einem überwiegenden Teil mittels einer zusätzlich zur Membran vorgesehenen Feder erzeugt. In alternativen Ausführungen kann die elastische Rückstellkraft auch ausschließlich von einer zusätzlich zur Membran vorgesehenen Feder erzeugt werden. Die Membran kann ich diesen Ausführungen flexibel, aber unelastisch sein.

Die Membran und das Vorsteuerorgan können mittels eines Getriebes, Gestänges oder dergleichen gekoppelt sein. Bevorzugt sind sie jedoch unbeweglich miteinander verbunden. Sie können separat gefertigt und miteinander gefügt oder in einem Verfahren der Urformung gemeinsam als Baueinheit geformt sein. Sie können aus dem gleichen Werkstoff bestehen. Bevorzugt besteht die Membran aus einem Elastomer oder weist eine Elastomerschicht oder eine Elastomermatrix mit eingebetteten Verstärkungselementen, beispielsweise Verstärkungsfasern, auf. Das Vorsteuerorgan kann aus einem metallenen Werkstoff oder aus Kunststoff, vorzugsweise einem thermoplastischen Kunststoff, bestehen. So können die Membran und das Vorsteuerorgan durch Pressformen oder vorzugsweise Spritzformen als Baueinheit geformt werden. Bestehen sie aus dem gleichen Werkstoff, beispielsweise aus einem Elastomer mit oder ohne Verstärkungselemente(n), können sie gemeinsam durch einfaches Spritzformen geformt werden. Unterscheiden sie sich dem Werkstoff nach, können sie durch Zweikomponenten-Spritzformen gemeinsam als Baueinheit geformt werden. In einer ebenfalls vorteilhaften Variante wird eines aus Vorsteuerorgan und Membran, vorzugsweise das Vorsteuerorgan, separat gefertigt, in eine Spritzform eingelegt und mit dem Material für das andere aus Vorsteuerorgan und Membran angespritzt oder bereichsweise umspritzt, so dass die Membran und das Vorsteuerorgan ebenfalls einen festen Verbund und somit eine Baueinheit bilden.

Das Druckfluid wirkt zur Verstellung des Vorsteuerorgans unmittelbar auf die Membran. Leckagen können vermieden und der Verschleiß beweglicher Teile verringert werden, da das bewegliche Vorsteuerorgan nicht durch die Wand einer Kammer ragt oder mittels eines beweglich durch eine Kammerwand ragenden Betätigungselements verstellt werden muss.

Die Membran dient als flächenhafte Dichtstruktur, als Dichtmembran. Sie kann längs eines um einen nachgiebigen Membranbereich umlaufenden Rands einfach und sicher in Bezug auf das Druckfluid dicht montiert werden. Ein Abfluss zu einem Druckfluidreservoir kann entfallen.

Ist die Rückstellkraft, die dem Steuerdruck entgegen direkt oder indirekt auf die Membran wirkt, eine elastische Rückstellkraft, wird das Fail-Safe-Verhalten des Steuerventils verbessert. Mittels der elastischen Rückstellkraft kann ein Mindestdruck vorgegeben werden, bei dessen Erreichen oder Überschreiten die Membran nachgibt und das Steuerorgan in Richtung auf die zweite Vorsteuerposition bewegt wird. Die zweite Vorsteuerposition ist in derartigen Ausführungen eine Maximalflussposition. Zum Öffnen des Auslasses der Steuerkammer kommt es daher nicht auf die Funktionstüchtigkeit der Elektromagneteinrichtung an. Maßgeblich sind der auf die Membran wirkende Steuerdruck und die ihm entgegenwirkende elastische Rückstellkraft. Fällt die Stromversorgung der Elektromagneteinrichtung aus, wird eine angeschlossene Düseneinrichtung dennoch stets dann mit dem Druckfluid versorgt, wenn der Steuerdruck den mittels der elastischen Rückstellkraft vorgegebenen Mindestdruck erreicht oder überschritten hat. Der Mindestdruck kann insbesondere ein Überdruck von 1 ± 0.2 bar gemessen gegen den äußeren Umgebungsdruck am Ort der Düse(n) sein. Wegen der mittels der Membran verwirklichten Rückschlagfunktion wird bei geringem Druck des Druckfluids der Vorsteuerquerschnitt geschlossen oder zumindest verkleinert, so dass in der Steuerkammer ein ausreichender Steuerdruck herrscht, um den Ventilkolben in Richtung auf die Minimalflussposition zu bewegen. Hierdurch wird die Abgabe von Druckfluid, das nur unter vergleichsweise geringem Druck steht, durch den primären Steuerquerschnitt verhindert oder zumindest reduziert. Es kann weniger und vorteilhafterweise kein Druckfluid nutzlos zu der Düseneinrichtung abströmen. In der Folge können die gegebenenfalls mit dem Druckfluid zu versorgenden anderen Verbraucher, wie etwa Schmierstellen eines Motors eines Kraftfahrzeugs, mit höherer Sicherheit mit dem Druckfluid versorgt werden. Es wird auch kein Rückschlagventil zusätzlich zum Steuerventil benötigt, um einen derartigen Abfluss über die Düseneinrichtung zu verhindern.

Die Elektromagneteinrichtung kann in einem nicht bestromten Zustand vom Vorsteuerorgan entkoppelt sein.

Trotz verbessertem Fail-Safe-Verhalten kann eine hohe Flexibilität hinsichtlich der Steuerbarkeit des Druckfluids erhalten werden. Bei funktionstüchtiger Elektromagneteinrichtung kann diese das Vorsteuerorgan in Abhängigkeit von Steuersignalen einer übergeordneten Steuerung und somit grundsätzlich jederzeit in die erste Vorsteuerposition bewegen und dadurch die Versorgung zu der oder den Düsen unterbrechen. Wird die Elektromagneteinrichtung hingegen stromlos geschaltet oder fällt die Stromversorgung aus, wird die Düseneinrichtung bei Erreichen oder Überschreiten des erläuterten Mindestdrucks mit dem Druckfluid versorgt.

Die Membran kann in einer zusätzlich zur Steuerkammer vorgesehenen Membrankammer angeordnet sein. Sie kann einen gegen die Rückstellkraft nachgiebigen Wandbereich der Membrankammer bilden. In bevorzugten Ausführungen ist die Membran jedoch der Rückstellkraft entgegenwirkend mit dem Steuerdruck beaufschlagbar. Sie kann insbesondere einen gegen die Rückstellkraft nachgiebigen Wandbereich der Steuerkammer bilden. Vorzugsweise bildet die Membran einen Wandbereich, der dem Ventilkolben axial in einem Abstand gegenüberliegt. Ist die Membran, wie bevorzugt, in axialer Flucht zum Ventilkolben angeordnet, können die radialen Abmessungen des Steuerventils verringert und ein zwar axial entsprechend gestrecktes, aber radial schlankes Steuerventil erhalten werden. Eine radial schlanke Bauweise kommt den Einbauverhältnissen, wie sie typischerweise bei Verbrennungsmotoren von Kraftfahrzeugen anzutreffen sind, entgegen.

Die Vorsteuereinrichtung kann als Rückschlagventil gebildet sein, indem das Vorsteuerorgan über die Membran in Richtung auf die erste Vorsteuerposition mit der elastischen Rückstellkraft beaufschlagt und dadurch der Vorsteuerquerschnitt gesperrt wird. Die Rückstellkraft kann das Vorsteuerorgan bei Einnahme der ersten Vorsteuerposition in einen Ventilsitz der Vorsteuereinrichtung drücken. Im Bereich des Ventilsitzes ist in derartigen Ausführungen der mittels des Vorsteuerorgans der Größe nach veränderbare Vorsteuerquerschnitt gebildet. Die Größe der Rückstellkraft und der dem Druckfluid ausgesetzten Fläche der Membran oder einer die Membran stützenden Stützstruktur bestimmen eine Druckschwelle, bei deren Überschreitung das Vorsteuerorgan von seinem Sitz abhebt und den Vorsteuerquerschnitt freigibt. Auf diese Weise kann ein Mindestdruck vorgegeben werden, der am Druckanschluss erreicht oder überschritten werden muss, damit der Ventilkolben den primären Steuerquerschnitt des Hauptventils freigibt und Druckfluid über den Arbeitsanschluss zu der oder den Düsen strömen kann. Der Mindestdruck ist vernünftigerweise so gewählt, dass eine Sprühverteilung des Druckfluides durch die Düse(n) gewährleistet ist. Die Elektromagneteinrichtung wirkt in bevorzugten Ausführungen über die Membran auf das Vorsteuerorgan, sodass die Membran die Elektromagneteinrichtung dem Druckfluid gegenüber abdichtet und somit abschirmt. Die Elektromagneteinrichtung umfasst eine mit Steuersignalen steuerbare Spule und einen hin und her beweglichen Anker der mit der Spule elektromagnetisch zusammen wirkt. Die Steuersignale für die Spule können insbesondere Steuerströme sein. In einfachen Ausführungen ist die Spule zwischen diskreten Schaltstellungen unsteuerbar, beispielsweise zwischen bestromt und unbestromt. Der Anker kann auf einen Stößel wirken oder unmittelbar einen Stößel bilden, der in Richtung auf die erste Vorsteuerposition auf das Vorsteuerorgan wirkt. Bevorzugt wirkt der Stößel direkt auf das Vorsteuerorgan. Alternativ kann der Stößel stattdessen auf die Membran und der Kopplung der Membran mit dem Vorsteuerorgan entsprechend auf das Vorsteuerorgan wirken. Der Stößel kann mit einem Anker der Elektromagneteinrichtung insbesondere gefügt oder in einem Stück geformt sein.

Die Elektromagneteinrichtung kann dazu eingerichtet und mit dem Vorsteuerorgan so gekoppelt sein, dass die Elektromagneteinrichtung eine Bewegung des Vorsteuerorgans sowohl in Richtung auf die erste Vorsteuerposition als auch eine Bewegung in Richtung auf die zweite Vorsteuerposition bewirkt. In bevorzugten Ausführungen ist die Kopplung jedoch derart, dass mittels der Elektromagneteinrichtung nur eine Bewegung des Vorsteuerorgans in Richtung auf die erste Vorsteuerposition bewirkt wird, während die Bewegung in die Gegenrichtung, in Richtung auf die zweite Vorsteuerposition, durch Beaufschlagung mit dem Druckfluid bewirkt wird. Die Elektromagneteinrichtung kann in Bezug auf die Bewegung des Vorsteuerorgans in Richtung auf die zweite Vorsteuerposition vom Vorsteuerorgan insbesondere entkoppelt sein. Dies kann vorzugsweise dadurch bewerkstelligt werden, dass eine Federkraft in Richtung auf die zweite Vorsteuerposition auf den Anker und/oder den Stößel der Elektromagneteinrichtung wirkt. Der Stößel kann in einer inaktiven Position einen lichten Abstand zu dem Vorsteuerorgan oder der Membran oder einer die Membran stützenden, der Nachgiebigkeit der Membran entsprechend hin und her beweglichen Stützstruktur aufweisen.

In den Unteransprüchen werden ebenfalls vorteilhafte Merkmale der Erfindung offenbart.

Nachfolgend wird die Erfindung an Hand von Ausführungsbeispielen erläutert. An den Ausführungsbeispielen offenbarte Merkmale bilden jeweils einzeln und in jeder Kombination von Einzelmerkmalen die Gegenstände der Ansprüche und auch die vorstehend erläuternden Ausführungen und Aspekte vorteilhaft weiter. Es zeigen:
- Figur 1: ein Steuerventil eines ersten Ausführungsbeispiels in einem Zustand minimaler Durchströmung und nicht aktivierter Elektromagneteinrichtung,
- Figur 2: das Steuerventil des ersten Ausführungsbeispiels in einem Zustand maximaler Durchströmung,
- Figur 3: das Steuerventil des ersten Ausführungsbeispiels im Zustand minimaler Druckströmung und aktivierter Elektromagneteinrichtung,
- Figur 4: ein Steuerventil eines zweiten Ausführungsbeispiels in einem Zustand minimaler Durchströmung und aktivierter Elektromagneteinrichtung,
- Figur 5: das Steuerventil des zweiten Ausführungsbeispiels in einem Zustand maximaler Durchströmung und nicht aktivierter Elektromagneteinrichtung, und
- Figur 6: ein Steuerventil eines dritten Ausführungsbeispiels in einem Zustand minimaler Durchströmung und aktivierter Elektromagneteinrichtungen.

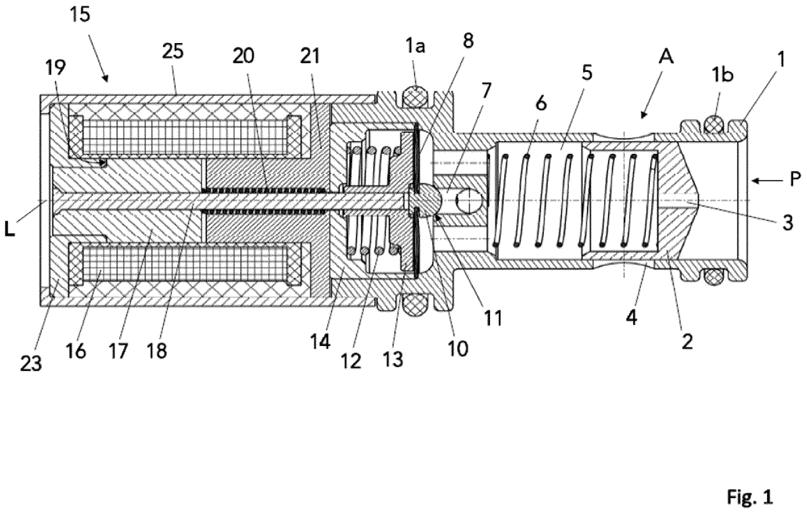

Figur 1 zeigt ein Steuerventil eines ersten Ausführungsbeispiels in einem Längsschnitt. Das Steuerventil weist ein Ventilgehäuse 1 mit einem Druckanschluss P und einem Arbeitsanschluss A auf. Mit dem Druckanschluss P ist es an eine Zuführung für ein unter Druck stehendes Fluid, im folgenden Druckfluid, und über die Zuführung an eine Druckquelle für das Druckfluid anschließbar oder angeschlossen. Die Druckquelle kann insbesondere eine Pumpe zur Förderung des Druckfluids sein. Über den Arbeitsanschluss A kann das am Druckanschluss P einströmende Druckfluid vom Steuerventil abströmen und einer Düseneinrichtung mit einer oder mehreren Düsen zur Sprühverteilung des Druckfluids zugeführt werden. Die eine oder mehreren Düsen können beispielsweise Kühldüsen zur Sprühkühlung einer oder mehrerer Komponenten einer Brennkraftmaschine sein.

In bevorzugten Anwendungen handelt es sich bei der Brennkraftmaschine um einen Verbrennungsmotor zum Antreiben eines Kraftfahrzeuges. In derartigen Anwendungen kann oder können die über eine Abführleitung am Arbeitsanschluss A angeschlossene(n) Düse(n) der Sprühkühlung von einem oder mehreren Kolben des Verbrennungsmotors dienen und zu diesem Zweck in an sich bekannter Weise im Motor angeordnet sein. Als Kühlfluid kann insbesondere das Schmieröl für den Motor dienen, das vom Schmierölsystem abgezweigt wird. Das durch die Sprühverteilung abgegebene Kühlfluid kann in weiterer Funktion die zu kühlende(n) Komponente(n) auch schmieren.

Wenn im Rahmen der Anmeldung von einer Sprühverteilung oder -kühlung die Rede ist, soll damit eine Verteilung oder Kühlung des Druckfluids durch Sprühen und auch eine Verteilung oder Kühlung durch Spritzen umfasst sein.

Das Steuerventil umfasst ein Hauptventil mit einem Ventilkolben 2 und eine Vorsteuereinrichtung zum Umsteuern des Ventilkolbens 2 zwischen unterschiedlichen Kolbenpositionen. Die Vorsteuereinrichtung umfasst eine mit dem Druckfluid beaufschlagbare Membran 8 und ein mit der Membran 8 mechanisch gekoppeltes Vorsteuerorgan 10, dass mittels der Membran 8 zwischen unterschiedlichen Vorsteuerpositionen hin und her bewegbar ist.

Der Ventilkolben 2 ist in einem axial erstreckten Gehäuseabschnitt des Ventilgehäuses 1 zwischen einer Position minimaler Durchströmung, im folgenden Minimalflussposition, und einer Position maximaler Durchströmung, im folgenden Maximalflussposition, axial hin und her beweglich. Der axial erstreckte Gehäuseabschnitt führt den Ventilkolben 2 unter Ausbildung eines über den Umfang des Ventilkolbens 2 und axial erstreckten Dichtspalts. Der Gehäuseabschnitt dient als Gleitführung für den Ventilkolben. Das Hauptventil ist dementsprechend als Schiebeventil ausgeführt. Mittels des Ventilkolbens 2 wird ein primärer Steuerquerschnitt 4 des Steuerventils gesteuert. Der primäre Steuerquerschnitt 4 verbindet den Druckanschluss P bei geöffnetem Hauptventil mit dem Arbeitsanschluss A. Der primäre Steuerquerschnitt 4 umfasst mehrere Durchgangsöffnungen, die im Gehäuseabschnitt im Bereich des Dichtspalts über den Umfang des Gehäuseabschnitts verteilt angeordnet sind. Nimmt der Ventilkolben 2 wie in Figur 1 dargestellt die Minimalflussposition ein, ist die Größe des primären Steuerquerschnitts minimal. Im Ausführungsbeispiel entspricht die Minimalflussposition einer Schließposition, so dass der Ventilkolben 2 den Arbeitsanschluss A vom Druckanschluss P sperrt und das Hauptventil nicht durchströmt werden kann. Die Versorgung zur Düseneinrichtung ist unterbrochen.

Der Ventilkolben 2 wird im Ventilbetrieb an einer in Bezug auf den Druckanschluss P stromaufwärtigen Stirnseite, die im Folgenden als Vorderseite bezeichnet wird, mit dem am Druckanschluss P einströmenden Druckfluid beaufschlagt. An einer von der Vorderseite axial abgewannten Rückseite des Ventilkolbens 2 ist eine Steuerkammer 5 gebildet. Der Ventilkolben 2 begrenzt die Steuerkammer 5 axial. Die Steuerkammer 5 und der an die Vorderseite des Ventilkolbens 2 grenzende Druckraum sind ständig mit dem Druckanschluss P verbunden. Ein von der Vorderseite zur Rückseite durch den Ventilkolben 2 erstreckter Verbindungskanal 3 verbindet die Steuerkammer 5 permanent mit dem an die Vorderseite des Ventilkolbens 2 grenzenden Druckraum.

Der Verbindungskanal 3 bildet den Einlass der Steuerkammer 5. Das vom Druckanschluss P durch den Verbindungskanal bzw. Einlass 3 einströmende Druckfluid erzeugt in der Steuerkammer 5 einen Gegendruck, der dem auf die Vorderseite des Ventilkolbens 2 wirkenden Druck entgegenwirkt. Um den Ventilkolben 2 in Bezug auf seine axiale Position steuern zu könne, ist der Steuerdruck der Steuerkammer 5 steuerbar. Die Steuerung wird mittels der Vorsteuereinrichtung am Auslass 7 der Steuerkammer 5 vorgenommen.

Der den Ventilkolben 2 umschließende Gehäuseabschnitt ist zylindrisch. Die mit dem in das Steuerventil einströmenden Druckfluid beaufschlagbare Stirnfläche an der Vorderseite und die Stirnfläche an der mit dem Steuerdruck beaufschlagbaren Rückseite des Ventilkolbens 2 sind gleich groß, so dass bei gleichem Druck an der Vorderseite und Rückseite am Ventilkolben 2 ein Gleichgewicht der vom Druckfluid ausgeübten Druckkräfte herrscht. Eine Ventilfeder 6 sorgt dafür, dass der Ventilkolben 2 bei Druckgleichheit in die Minimalflussposition bewegt oder in der Minimalflussposition gehalten wird.

Die Ventilfeder 6 ist in der Steuerkammer 5 angeordnet. Es handelt sich um eine Schraubenfeder, die auf Druck beansprucht wird. Die Ventilfeder 6 kann der Bauart und/oder der Federbeanspruchung nach auch andersartig ausgeführt und/oder angeordnet sein, eine Schraubendruckfeder wird jedoch bevorzugt. Die Ventilfeder 6 stützt sich mit einem Federende an einem im Ventilgehäuse 1 gebildeten Federsitz und mit ihrem anderen Federende unmittelbar am Ventilkolben 2 ab. Eine unmittelbare Abstützung am Ventilkolben 2 ist zweckmäßig, aber nicht unerlässlich. So könnte die Ventilfeder 6 auch über ein oder mehrere Zwischenglieder auf den Ventilkolben 2 wirken.

Der Ventilkolben 2 ist als Hohlkolben ausgeführt. Die Steuerkammer 5 erstreckt sich axial in den an der Rückseite offenen, hohlen Ventilkolben 2, wodurch die axiale Baulänge des Steuerventils bei Ausführung als Schiebeventil verringert werden kann. Der Ventilfeder 6 steht dennoch ein ausreichend langer Federweg zur Verfügung. Ein Schiebeventil hat einem Sitzventil gegenüber den Vorteil einer besseren Axialführung des Ventilkolbens 2 und einer genaueren Steuerbarkeit des primären Steuerquerschnitts, hier des Steuerquerschnitts 4. Soll der Ventilkolben 2 wie bevorzugt nur zwischen einer Minimalflussposition/Schließposition und einer Maximalflussposition umgesteuert werden, kann die Ventilfeder 6 nach Federhärte und/oder Federvorspannung hierauf einfach und genau ausgelegt werden.

Die Membran 8 begrenzt die Steuerkammer 5 an einem axialen Kammerende. Die Membran 8 bildet eine nachgiebige Stirnwand der Steuerkammer 5. Sie wird im Ventilbetrieb mit dem in der Steuerkammer 5 herrschenden Steuerdruck beaufschlagt. Dem Steuerdruck wirkt eine elastische Rückstellkraft entgegen, die mittels eines Federglieds 12 erzeugt wird. Das Federglied 12 ist von der Steuerkammer 5 aus gesehen hinter der Membran 8 angeordnet. Im Ausführungsbeispiel ist es in einem hinter der Membran 8 befindlichen Aufnahmeraum des Ventilgehäuses 1 aufgenommen. Es ist an einem Federende am Ventilgehäuse 1 abgestützt und wirkt mit dem anderen Federende dem Steuerdruck entgegen auf die Membran 8.

Das Federglied 12 wirkt nicht unmittelbar, sondern über eine Stützstruktur 13 auf die Membran 8. Die Membran 8 als solche muss dem Steuerdruck daher keinen oder keinen nennenswerten Widerstand entgegensetzen, so dass die elastische Rückstellkraft ausschließlich oder zumindest zum überwiegenden Teil durch das Federglied 12 bestimmt sein kann. Bevorzugt ist die Membran 8 jedoch elastisch dehnbar, so dass sie einen gewissen, wenngleich kleinen Beitrag zur Rückstellkraft leistet. Die Stützstruktur 13 dient der Verteilung und Übertragung der vom Federglied 12 erzeugten elastischen Rückstellkraft bzw. Federkraft auf die unter der Einwirkung des Steuerdrucks gegen die Rückstellkraft verformbare Membran 8.

Die Stützstruktur 13 kann mit der Membran 8 in einem reinen Druckkontakt angeordnet oder mit einem zentralen Bereich der Membran 8 in Bezug auf die Richtung der Verformbarkeit der Membran 8, im Ausführungsbeispiel axial, unbeweglich gefügt sein. Im Falle einer Fügeverbindung muss allerdings eine für die Erfüllung der Vorsteuerfunktion ausreichende Verformbarkeit der Membran 8 gewährleistet sein.

Das Vorsteuerorgan 10 nimmt im dargestellten Zustand des Steuerventils eine erste Vorsteuerposition ein, in der es den Auslass 7 der Steuerkammer 5 verschließt. Bei in der ersten Vorsteuerposition befindlichem Vorsteuerorgan 10 strömt das Druckfluid im Ventilbetrieb durch den vom Verbindungskanal 3 gebildeten Einlass in die Steuerkammer 5, kann aber aus der Steuerkammer 5 nicht abströmen, da der Auslass 7 vom Vorsteuerorgan 10 verschlossen wird. Das Federglied 12 wirkt in Richtung auf die erste Vorsteuerposition auf das Vorsteuerorgan 10. Im Ausführungsbeispiel drückt das Federglied 12 das Vorsteuerorgan 10 in einen am Auslass 7 gebildeten Ventilsitz, der einen mittels des Vorsteuerorgans 10 der Größe nach veränderbaren Vorsteuerquerschnitt 11 bestimmt.

Die Membran 8 ist im Strömungspfad des Druckfluids zwischen dem Druckanschluss P und dem veränderbaren Vorsteuerquerschnitt 11 angeordnet. Wie bevorzugt ist sie im Strömungspfad des Druckfluids zwischen dem Einlass 3 der Steuerkammer 5 und dem Vorsteuerquerschnitt 11 angeordnet. Die Membran 8 begrenzt den Strömungspfad stromauf des Vorsteuerquerschnitts 11. Sie ist somit auch dann mit dem Druckfluid in Kontakt, wenn das Vorsteuerorgan 10 die erste Vorsteuerposition einnimmt, in der es den Vorsteuerquerschnitt 11 vorzugsweise verschließt. Nimmt das Vorsteuerorgan 10 die erste Vorsteuerposition ein, in der es wie im Ausführungsbeispiel bevorzugt den Vorsteuerquerschnitt 11 verschließt, ist die Membran 8 dem in der Steuerkammer 5 herrschenden Steuerdruck ausgesetzt.

Der in der Steuerkammer 5 herrschende Steuerdruck wirkt unmittelbar auf die Membran 8 und über die Membran 8 auf die Stützstruktur 13. Die Membran 8 kann wie bereits erwähnt so ausgeführt sein, dass sie dem Steuerdruck keinen praktisch relevanten Widerstand entgegensetzt. Die auf das Federglied 12 wirkende Kraft wird durch den Steuerdruck und die mit dem Steuerdruck beaufschlagbare Fläche der Stützstruktur 13 bestimmt. Die Membran 8 kann in guter Näherung hinsichtlich der Kräfteverhältnisse vernachlässigt werden. Allerdings ist die Membran 8 vorzugsweise elastisch dehnbar, derart, dass sie sich im Betrieb des Steuerventils nur elastisch verformt und auch nach einer Vielzahl von Lastwechseln und damit einhergehenden Verformungen wieder die Form des ursprünglichen, unbelasteten Zustands annimmt.

Die Membran 8 erfüllt primär eine Dichtfunktion, indem sie die Steuerkammer 5 dicht verschließt, so dass die Beweglichkeit des Steuerorgans 10 nicht, wie bei den Steuerventilen des Standes der Technik, mit Leckageverlusten einhergeht.

Mittels des Federglieds 12 wird eine Druckschwelle vorgegeben, bei deren Erreichen oder Überschreiten das Federglied 12 einfedert und das Vorsteuerorgan 10 in Richtung auf die zweite Vorsteuerposition bewegt wird und somit von seinem Ventilsitz abhebt. Bei dieser Bewegung des Vorsteuerorgans 10 vergrößert sich der Vorsteuerquerschnitt 11, so dass das Druckfluid durch den Auslass 7 aus der Steuerkammer 5 abströmen kann. Zweckmäßigerweise ist der Auslass 7 mit dem Arbeitsanschluss A verbunden, so dass das aus der Steuerkammer 5 abströmende Druckfluid über den Arbeitsanschluss A zu der oder den Düsen geführt wird.

Am Außenumfang des Ventilgehäuses 1 kann sich ein Verbindungskanal erstrecken, der den Auslass 7 mit dem Arbeitsanschluss A verbindet. Hierfür kann eine äußere Struktur, die in den Figuren nicht abgebildet ist, einen Axialabschnitt des Ventilgehäuses 1 umgeben, so dass ein ringförmiger Verbindungskanal erhalten wird, der sich zwischen der äußeren Struktur und dem von dieser umgebenen Axialabschnitt des Ventilgehäuses 1 erstreckt. Der Auslass 7 und der Arbeitsanschluss A münden vorzugsweise in diesem Axialabschnitt in den Verbindungskanal, aus dem das Druckfluid zu der oder den Düsen strömen kann. Das Ventilgehäuse 1 kann mit besagtem Axialabschnitt axial in die äußere Struktur ragen und mittels Dichtelementen 1a und 1b axial abgedichtet sein. Die beispielsweise als Dichtringe gebildeten Dichtelemente 1a und 1b begrenzen in derartigen Ausführungen den Verbindungskanal und dichten ihn ab. In alternativen Ausführungen kann ein Verbindungskanal oder können mehrere Verbindungskanäle im Ventilgehäuse 1 erstreckt sein. In nochmals alternativen Ausführungen kann der Auslass 7 mittels einer Verbindungsleitung mit dem Arbeitsanschluss A verbunden sein, so dass durch den Auslass 7 abströmendes Druckfluid erst an einer vom Ventilgehäuse 1 entfernten Stelle mit dem Druckfluid vom Arbeitsanschluss A zusammengeführt wird.

Solange der Steuerdruck unterhalb der Druckschwelle bleibt, verschließt das Vorsteuerorgan 10 den Vorsteuerquerschnitt 11 und somit den Auslass 7. Aufgrund des permanent offenen Verbindungskanals 3 folgt der Steuerdruck dem Druck, den das Druckfluid am Druckanschluss P aufweist. Der Steuerdruck und der Druck am Druckanschluss P können als gleich angesehen werden. Die Ventilfeder 6 hält den Ventilkolben 2 in der Minimalflussposition, die im Ausführungsbeispiel wie bevorzugt eine Schließposition ist. Der Ventilkolben 2 verschließt den primären Steuerquerschnitt 4 und trennt dadurch den Arbeitsanschluss A vom Druckanschluss P.

Die Druckschwelle, bei deren Überschreitung die Einfederbewegung des Federdrucks 12 einsetzt, wird durch die Federvorspannung bestimmt, mit der das Federglied 12 eingebaut ist. Mittels eines eingebauten Federglieds, insbesondere einer Schraubendruckfeder, kann die Federvorspannung und somit die Druckschwelle sehr genau und auf einfache Weise beim Einbau eingestellt werden. Grundsätzlich kann anstelle einer mechanischen Feder auch eine pneumatische Feder vorgesehen sein, die allerdings hinsichtlich der Leckage von Druckgas einen Zusatzaufwand erfordern würde.

Das Vorsteuerorgan 10 ist mit der Membran 8 wie bereits erwähnt mechanisch gekoppelt. Die Kopplung ist derart, dass das Vorsteuerorgan 10 der beim Einfedern des Federglieds 12 erfolgenden Verformung der Membran 8 in Richtung auf die zweite Vorsteuerposition folgt. Das Vorsteuerorgan 10 ist in einem zentralen Bereich der Membran 8 angeordnet, im Ausführungsbeispiel ist es im Zentrum der Membran 8 angeordnet, und im zentralen Bereich nicht beweglich mit der Membran 8 verbunden.

Die Membran 8 und das Vorsteuerorgan 10 sind separat gefertigt und miteinander gefügt. Sie können insbesondere form- und/oder kraftschlüssig gefügt sein. Die Fügeverbindung kann aber auch einen Stoffschluss von Membran 8 und Vorsteuerorgan 10 einschließen oder grundsätzlich auch nur stoffschlüssig sein. In ebenfalls bevorzugten Ausführungen sind die Membran 8 und das Vorsteuerorgan 10 als Spritzgusseinheit ausgeführt. Die Membran 8 und das Vorsteuerorgan 10 können beispielsweise aus unterschiedlichen Werkstoffen, insbesondere Kunststoffen, in einem Zweikomponenten-Spritzgießverfahren hergestellt werden. So kann die Membran 8 insbesondere aus einem Elastomer und das Vorsteuerorgan 10 ebenfalls aus einem Elastomer oder vorzugsweise aus einem demgegenüber härteren thermoplastischen Kunststoff gefertigt sein. Grundsätzlich können die Membran 8 und das Vorsteuerorgan 10 als einheitliches Spritzgussteil auch aus dem gleichen Elastomer bestehen. In noch einer Variante kann das Vorsteuerorgan 10 aus Kunststoff oder einem metallenen Werkstoff bestehen und als vorgeformtes Teil beim Herstellen der Membran 8 mit dem vorzugsweise Membranmaterial, elastomeren Kunststoffmaterial, bereichsweise umspritzt oder angespritzt werden.

Das Vorsteuerorgan 10 ist in Richtung auf die zweite Vorsteuerposition, im Ausführungsbeispiel axial, in Kontakt mit der Stützstruktur 13. Hierbei kann es sich um einen reinen Anschlagkontakt handeln, in den die Stützstruktur 13 durch das Federglied 12 gezwungen wird. Das Vorsteuerorgan 10 kann mit der Stützstruktur 13 aber auch gefügt sein, beispielsweise direkt oder über die Membran 8.

Die Membran 8 ist im Ventilgehäuse 1 längs eines äußeren, um das Vorsteuerorgan 10 umlaufenden Umfangsrands in Bezug auf das Druckfluid dicht montiert. Die Membran 8 ist über ihren äußeren Umfangsrand unter Ausbildung einer umlaufenden Dichtungsfuge fixiert, kann sich im Bereich der Dichtungsfuge also nicht bewegen. Aufgrund der nicht beweglichen, statischen Abdichtung kann ein dichter Verschluss der Steuerkammer 5 auf einfache Weise sicher gewährleistet werden. Die Membran 8 ist längs ihres Umfangsrand 5 axial zwischen einer umlaufenden Schulter des Ventilgehäuses 1 und einem axial gegenüberliegenden, stirnseitigen Rand einer Montagestruktur 14 eingeklemmt, um die sichere Abdichtung der Steuerkammer 5 durch die Membran 8 zu erhalten.

Das Gehäuse 1 ist im Wesentlichen rohrförmig und weist ein den Druckanschluss P bildendes, offenes axiales erstes Ende und an der axial gegenüberliegenden Stirnseite ein ebenfalls offenes Ende auf, so dass am einen Ende, beim Druckanschluss P, die Ventilfeder 6 und der Ventilkolben 12 und am gegenüberliegenden Ende die Membran 8 mit dem Vorsteuerorgan 10, die Stützstruktur 13 und das Federglied 12 eingesetzt werden können. Anschließend wird die Montagestruktur 14 eingesetzt und befestigt, beispielsweise mit dem Ventilgehäuse 1 verschraubt, um die Klemmverbindung der Membran 8 herzustellen.

In Bezug auf konstruktiv und/oder strömungstechnisch günstige Merkmale sei noch angemerkt, dass in der Steuerkammer 5 axial zwischen dem Ventilkolben 2 und der Membran 8 der Membran 8 axial zugewandt der Ventilsitz für das Steuerorgan 10 gebildet ist.

Das Steuerventil umfasst eine zur Vorsteuereinrichtung gehörende Elektromagneteinrichtung 15. Die Elektromagneteinrichtung 15 ist dazu eingerichtet, Steuersignale einer übergeordneten Steuerung, beispielsweise einer Motorsteuerung eines Kraftfahrzeugs, zu empfangen und in Abhängigkeit von den Steuersignalen auf das Vorsteuerorgan 10 einzuwirken. Auf diese Weise wird das Steuerventil nicht nur entsprechend der Rückschlagfunktion des Federglieds 12 gesteuert, sondern kann an den tatsächlichen Kühlbedarf eines zu kühlenden Bauteils, wie etwa einer Komponente einer Brennkraftmaschine, flexibel angepasst werden. Die Steuersignale können insbesondere Steuerströme sein. Die Elektromagneteinrichtung 15 ist zwischen den zwei Zuständen 'bestromt' und 'unbestromt' umsteuerbar.

Die Elektromagneteinrichtung 15 umfasst eine elektrische Spule 16 und eine in Richtung auf die erste Vorsteuerposition und in die Gegenrichtung hin und her bewegliche Fügeeinheit aus einem Anker 17 und einem Stößel 18. Der Stößel 18 verlängert den Anker 17 in Richtung auf das Vorsteuerorgan 10 und liegt dem Vorsteuerorgan 10 in einer in Figur 1 eingenommenen Inaktivposition gegenüber. Eine Feder 20 beaufschlagt den Anker 17 und dadurch den Stößel 18 in Richtung auf die Inaktivposition. In der Inaktivposition wirkt der Stößel 18 auf das Vorsteuerorgan 10 nicht ein. Er weist vom Vorsteuerorgan 10 einen axial lichten Abstand auf.

Die Elektromagneteinrichtung 15 ist dazu eingerichtet, den Stößel 18 zwischen zwei diskreten Schaltpositionen umzusteuern. Die eine der Schaltpositionen ist die in Figur 1 eingenommene Inaktivposition bei unbestromter Spule 16. Durch Bestromung der Spule 16 wird der Anker 17 und damit zusammen der Stößel 18 in Richtung auf das Vorsteuerorgan 10 in eine Aktivposition, der anderen Schaltposition des Stößels 18, bewegt. Die Inaktivposition des Stößels 18 wird mittels eines innerhalb der Elektromagneteinrichtung 15 vorgesehenen Anschlags 19 durch Anschlagkontakt vorgegeben. Den Anschlag 19 bildet eine Montagestruktur 23, im Ausführungsbeispiel ein Deckel, die im oder am Gehäuse 25 der Elektromagneteinrichtung 15 angeordnet und mit dem Gehäuse 25 unbeweglich verbunden ist, so dass sie als ein Teil des Gehäuses der Elektromagneteinrichtung 15 aufgefasst werden kann. Eine weitere, in das Gehäuse 25 der Elektromagneteinrichtung 15 eingesetzte Montagestruktur 21 wird vom Stößel 18 in Richtung auf das Vorsteuerorgan 10 durchragt. Die Montagestruktur 21 stützt die Feder 20 an einem Federende. Mit dem anderen Federende wirkt die Feder 20 in Richtung auf die Inaktivposition auf den Stößel 18; genauer gesagt wirkt sie unmittelbar auf den Anker 17 und über diesen auf den Stößel 18. Der Stößel 18 wird mit Federkraft in Richtung auf die Inaktivposition beaufschlagt und ist mit einer elektromagnetischen Kraft in Richtung auf die Aktivposition beaufschlagbar. Nimmt der Stößel 18 die Inaktivposition ein, ergibt sich die Position des Vorsteuerorgans 10 aus dem Gleichgewicht der vom Steuerdruck herrührenden Kraft und der Federkraft des Federglieds 12. Wird die Spule 16 bestromt, überwindet die elektromagnetische Kraft die Federkraft der Feder 20 und bewegt den Stößel 18 in die Aktivposition. Im unbestromten Zustand nimmt der Stößel 18 stets die Inaktivposition ein. Im bestromten Zustand der Elektromagneteinrichtung 15 nimmt der Stößel 18 hingegen stets die Aktivposition ein. In der Aktivposition drückt der Stößel 18 das Vorsteuerorgan 10 ungeachtet der Größe des in der Steuerkammer 5 herrschenden Steuerdrucks in die erste Vorsteuerposition, die das Vorsteuerorgan 10 ungeachtet der Position des Stößels 18 auch stets dann einnimmt, wenn der in der Steuerkammer 5 herrschende Steuerdruck unterhalb der für das Einfedern des Federglieds 12 erforderlichen Druckschwelle liegt.

Übersteigt der Steuerdruck die mittels des Federglieds 12 vorgegebene Druckschwelle, hebt das Vorsteuerorgan 10 in Richtung auf die zweite Vorsteuerposition vom Ventilsitz ab. Der Vorsteuerquerschnitt 11 wird freigegeben, so dass Druckfluid aus der Steuerkammer 5 durch den Vorsteuerquerschnitt 11 und somit durch den Auslass 7 abströmen kann. Der den Einlass in die Steuerkammer 5 bildende Verbindungskanal 3 ist so gestaltet, dass das durch den Verbindungskanal 3 vom Druckanschluss P in die Steuerkammer 5 einströmende Druckfluid den durch das am Auslass 7 ausströmende Druckfluid verursachten Druckverlust nicht ausgleichen kann. Unter dem weiterhin hohen Druck an der Vorderseite des Ventilkolbens 2 bewegt sich der Ventilkolben 2 gegen die Kraft der Ventilfeder 6 und den verringerten Steuerdruck in Richtung auf die Maximalflussposition.

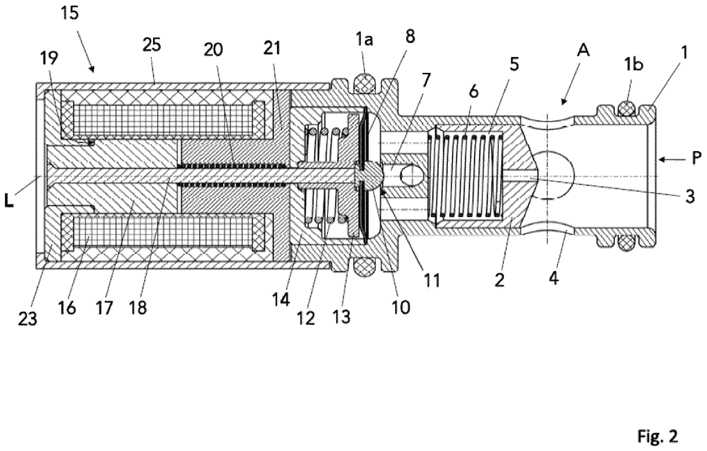

Figur 2 zeigt das Steuerventil des ersten Ausführungsbeispiels im Zustand maximaler Durchströmung des Hauptventils. Der Ventilkolben 2 nimmt die Maximalflussposition ein. Der primäre Steuerquerschnitt 4 ist vom Ventilkolben 2 vollständig frei und somit maximal. Das Druckfluid kann vom Druckanschluss P widerstandsarm durch den primären Steuerquerschnitt 4 zum Arbeitsanschluss A strömen und durch diesen zur Düseneinrichtung abströmen. Die Düseneinrichtung sprüht das Druckfluid gegen die jeweils zu kühlende Komponente.

Solange der Steuerdruck über der vorgegebenen Druckschwelle liegt und die vom Druckfluid auf die Vorderseite des Ventilkolbens 2 ausgeübte Kraft die vom Steuerdruck und der Ventilfeder 6 ausgeübte Kraft übersteigt, verbleibt der Ventilkolben 2 in der Maximalflussposition. Sinkt der Druck am Druckanschluss P unter einen mittels der Ventilfeder 6 vorgegebenen Wert, bewegt sich der Ventilkolben 2 in Richtung auf die Minimalflussposition, so dass sich wieder der in Figur 1 dargestellte Ventilzustand einstellt. Hierdurch wird sichergestellt, dass bei unzureichendem Druck am Druckanschluss P nicht unnötigerweise Druckfluid zur Düseneinrichtung strömen und dort nutzlos ausströmen kann.

Mittels der Elektromagneteinrichtung 15 kann die Durchströmung des Hauptventils aber auch bei an sich für die Sprühverteilung ausreichend hohem Druck am Druckanschluss P unterbrochen und die Sprühverteilung dadurch an den tatsächlichen Kühlbedarf der zu kühlenden Komponente(n) angepasst werden. Um die Versorgung der Düsenreinrichtung zu unterbrechen, wird die Elektromagneteinrichtung 15, genauer gesagt die Spule 16, bestromt und der Anker 17 samt Stößel 18 durch die dabei erzeugte elektromagnetische Kraft in Richtung auf die erste Vorsteuerposition des Vorsteuerorgans 10 bewegt. Bei dieser Bewegung gelangt der Stößel 18 in Richtung auf die erste Vorsteuerposition in Druckkontakt gegen das Vorsteuerorgan 10 und stößt das Vorsteuerorgan 10 bei der Bewegung in die Aktivposition in Richtung auf und letztlich in die erste Vorsteuerposition.

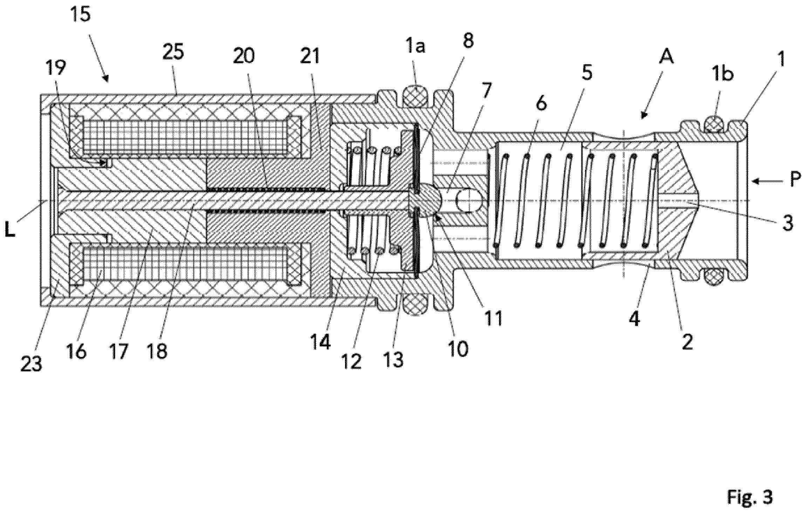

In Figur 3 nimmt der Stößel 18 die Aktivposition und das Vorsteuerorgan 10 die erste Vorsteuerposition ein. Der Stößel 18 drückt das Vorsteuerorgan 10 in den Ventilsitz am Auslass 7 der Steuerkammer 5, so dass das Vorsteuerorgan 10 den Vorsteuerquerschnitt 11 verschließt. Druckfluid kann durch den Verbindungskanal 3 bzw. den hierdurch gebildeten Einlass in die Steuerkammer 5 einströmen, aber nicht mehr abströmen. Der Steuerdruck folgt somit wieder dem Druck an der Vorderseite des Ventilkolbens 2. Solange jedoch die Spule 16 bestromt wird, hält die Elektromagneteinrichtung 15 das Vorsteuerorgan 10 in der ersten Vorsteuerposition. Die Druckfluidzufuhr zur Düseneinrichtung bleibt unterbrochen. Stellt die übergeordnete Steuerung fest, dass erneut ein Kühlbedarf besteht, wird die Stromzufuhr zur Elektromagneteinrichtung 15 unterbrochen, so dass die Feder 20 den Stößel 18 in die Inaktivposition bewegt und das Steuerventil wieder in den in Figur 1 dargestellten Zustand maximaler Durchströmung überführt wird.

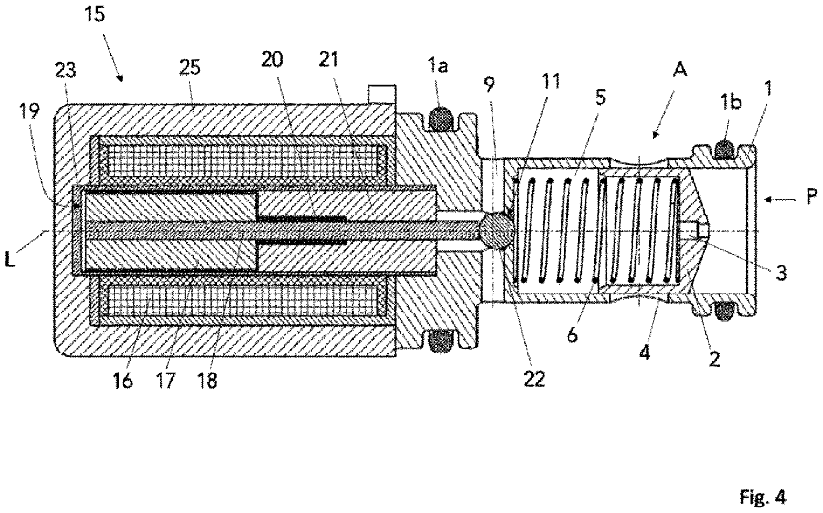

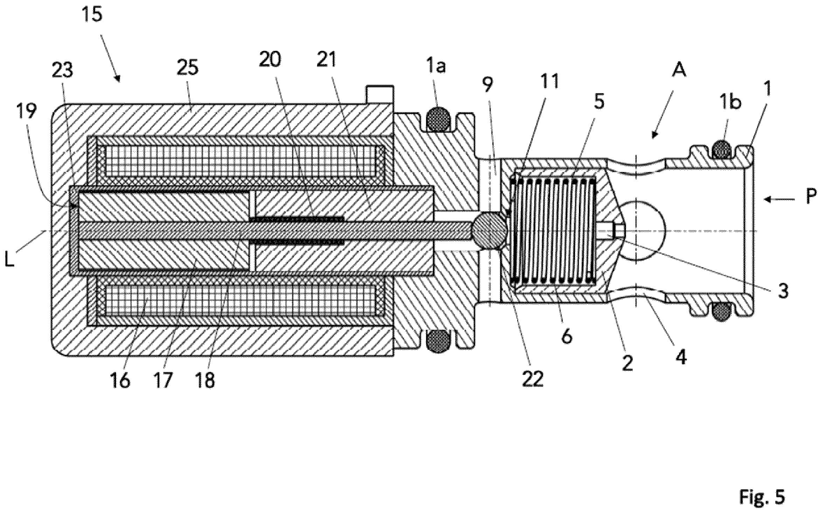

Die Figuren 4 und 5 zeigen ein Steuerventil eines zweiten Ausführungsbeispiels mit einem Hauptventil und einer Vorsteuereinrichtung. Das Hauptventil umfasst ein Ventilgehäuse 1 mit einem Druckanschluss P und einem Arbeitsanschluss A, einen Ventilkolben 2 zur Steuerung der Größe eines primären Steuerquerschnitts 4 und eine Ventilfeder 6, die in einer Steuerkammer 5 angeordnet ist.

Das Hauptventil ist insbesondere wieder als Schiebeventil gebildet. Der Ventilkolben 2 wird im axial erstreckten Gehäuseabschnitt des Ventilgehäuses 1 unter Ausbildung eines über den Umfang des Ventilkobens 2 und axial erstrecken Dichtspalts axial hin und her gleitend beweglich geführt. Ferner ist der primäre Steuerquerschnitt 4 im Bereich des Dichtspalts, d. h. im Bereich der Führung des Ventilkolbens 2, angeordnet. Die mit dem Druckfluid beaufschlagbaren Stirnflächen an der Vorderseite und der Rückseite des Ventilkolbens 2 sind gleich, und die Ventilfeder 6 beaufschlagt den Ventilkolben 2 in Richtung auf die in Figur 4 eingenommene Minimalflussposition. Die Steuerkammer 5 erstreckt sich wie im ersten Ausführungsbeispiel axial in den hohlen Ventilkolben 2. Nimmt der Ventilkolben 2 die Maximalflussposition ein (Fig. 5), hat sich die Steuerkammer 5 auf die axiale Länge der Umfangswand des Ventilkolben 2 verkürzt. Diese Kolbenumfangswand bildet wie im ersten Ausführungsbeispiel zugleich den Dichtspalt mit dem Ventilgehäuse 1 und sperrt in der Minimalflussposition den primären Steuerquerschnitt 4.

Die Elektromagneteinrichtung 15 weist wie im ersten Ausbildungsbeispiel einen axial hin und her beweglichen Stößel 18 auf, der durch die Kraft einer Feder 20 in Richtung auf die Inaktivposition beaufschlagt wird. In der Inaktivposition ist/sind der Stößel 18 und/oder der Anker 17 in axialem Kontakt mit einem Anschlag 19 einer Montagestruktur 23, die im Gehäuse 25 der Elektromagneteinrichtung 15 unbeweglich angeordnet ist und somit einen Teil des Gehäuses bildet. Durch Bestromung der Spule 16 und die hierbei auf den Anker 17 wirkende elektromagnetische Kraft wird der Stößel 18 gegen die Federkraft der Feder 20 in die in Figur 4 eingenommene Aktivposition bewegt. Der Stößel 18 wirkt bei der Bewegung in die Aktivposition nur durch Druckkontakt auf das Vorsteuerorgan 10. Der Stößel 18 drückt bei seiner Bewegung in die Aktivposition das Vorsteuerorgan 10 in die erste Vorsteuerposition, in der das Vorsteuerorgan 10 die Steuerkammer 5 auslassseitig verschließt.

Das Steuerventil entspricht in Bezug auf die Elektromagneteinrichtung 15 als solcher und in Bezug auf das Hauptventil mit Ausnahme der Steuerkammer 5 dem Steuerventil des ersten Ausführungsbeispiels, so dass für funktionsgleiche und auch weitgehend baugleiche Komponenten die gleichen Bezugszeichen wie im ersten Ausführungsbeispiel verwendet werden und, soweit nachfolgend keine Unterschiede beschrieben werden, auf die Ausführungen zum ersten Ausführungsbeispiel verwiesen wird.

Das Steuerventil des zweiten Ausführungsbeispiels weist keine die Steuerkammer 5 abdichtende Membran auf. Zur Unterscheidung vom ersten Ausführungsbeispiel sind der Steuerkammerauslass mit 9 und das Vorsteuerorgan mit 22 bezeichnet. Das Vorsteuerorgan 22 wird mittels der Elektromagneteinrichtung 15 in die Figur 4 eingenommene erste Vorsteuerposition bewegt und in der ersten Vorsteuerposition gehalten, wenn die Spule 16 bestromt wird. Der Stößel 18 drückt das Vorsteuerorgan 22 in die erste Vorsteuerposition, in der das Vorsteuerorgan 22 den Vorsteuerquerschnitt 11 und somit die Steuerkammer 5 im Bereich des Auslasses 9 verschließt. Druckfluid kann über den Verbindungskanal 3 in die Steuerkammer 5 einströmen, aber nicht aus der Steuerkammer 5 abströmen. Der Steuerdruck entspricht somit zumindest im Wesentlichen dem an der Vorderseite des Ventilkolbens herrschenden Druck. Die Ventilfeder 6 hält den Ventilkolben 2 in der Minimalflussposition.

Besteht Kühlbedarf, wird die Elektromagneteinrichtung 15 auf 'unbestromt' umgesteuert. Der Stößel 18 bewegt sich unter der Einwirkung der Feder 20 in Richtung auf eine Inaktivposition, weg von der Steuerkammer 5. Das Vorsteuerorgan 10 kann unter der Einwirkung des Steuerdrucks vom Ventilsitz abheben und dadurch den Vorsteuerquerschnitt 11 freigeben. Der in der Steuerkammer 5 herrschende Steuerdruck drückt das Vorsteuerorgan 22 in Richtung auf die zweite Vorsteuerposition gegen den Stößel 18. Der Stößel 18 begrenzt den Hub des Vorsteuerorgans 10.

Figur 5 zeigt das Vorsteuerventil des zweiten Ausführungsbeispiels im Zustand maximaler Durchströmung. Das Vorsteuerorgan 22 hat den Vorsteuerquerschnitt 11 freigegeben, hat also vom Ventilsitz der Vorsteuereinrichtung abgehoben und wird in der abgehobenen zweiten Vorsteuerposition vom Steuerdruck gegen den Stößel 18 gedrückt. Das Druckfluid kann aus der Steuerkammer 5 am Vorsteuerorgan 22 vorbei durch den Auslass 9 abströmen, zweckmäßigerweise zum Arbeitsanschluss A. Der an der Vorderseite des Ventilkolbens 2 herrschende Druck, der dem Druck des Druckfluids am Druckanschluss P entspricht, hat den Ventilkolben 2 gegen die Kraft der Ventilfeder 6 in die Maximalflussposition bewegt, so dass der primäre Steuerquerschnitt 4 maximal ist und das Druckfluid widerstandsarm vom Druckanschluss P zum Arbeitsanschluss A und über diesen zur Düseneinrichtung strömen kann.

Durch Bestromung der Elektromagneteinrichtung 15 kann das Vorsteuerorgan 22 wieder in die in Figur 4 dargestellte erste Vorsteuerposition bewegt und die Steuerkammer 5 hierdurch im Bereich des Auslasses 9 verschlossen werden.

Beim Steuerventil des zweiten Ausführungsbeispiels können wegen des Fehlens der Membran 8 zwar Leckverluste entstehen und es entfällt auch die mittels der Membran 8 im ersten Ausführungsbeispiel erhaltene Rückschlagfunktion, das Steuerventil des zweiten Ausführungsbeispiels zeichnet sich jedoch durch eine einfache Bauweise und hierdurch geringen Preis aus. Von besonderem Vorteil sind auch die Ausbildung als Schiebeventil mit dem als Axialführung für den Ventilkolben 2 dienenden Ventilgehäuse 1, ebenso die Ausführung des Ventilkolbens 2 als Hohlkolben und die Erstreckung der Steuerkammer 5 in hohlen Ventilkolben 2.

Ein weiterer Vorteil ist die sehr einfache Schnittstelle zwischen dem fluidischen Ventilteil und Elektromagneteinrichtung 15. Die Schnittstelle ist zwischen dem Stößel 18 und dem Vorsteuerorgan 22 gebildet, indem der Stößel 18 wie im ersten Ausführungsbeispiel nur durch Druckkontakt auf das Vorsteuerorgan 22 wirkt. Der Stößel 18 muss beim Zusammenbau des Steuerventils daher nicht passgenau zum Vorsteuerquerschnitt 11 ausgerichtet werden, da der Stößel 18 nicht selbst den Vorsteuerquerschnitt 11 steuert und daher den Vorsteuerquerschnitt 11 nicht selbst verschließen muss.

Von Vorteil ist auch noch, dass der Stößel 18 in Richtung auf die Inaktivposition mit einer Federkraft beaufschlagt und nur bei Bestromung der Elektromagneteinrichtung in die Aktivposition bewegt wird. Hierdurch wird ein Safe-Fail Verhalten verwirklicht, da das Hauptventil bei einer Unterbrechung der Verbindung zur übergeordneten Steuerung auf maximale Durchströmung umschaltet, wenn der auf die Vorderseite des Ventilkolbens 2 wirkende Druck am Ventilkolben eine Druckkraft erzeugt, die größer als die Federkraft der Ventilfeder 6 ist.

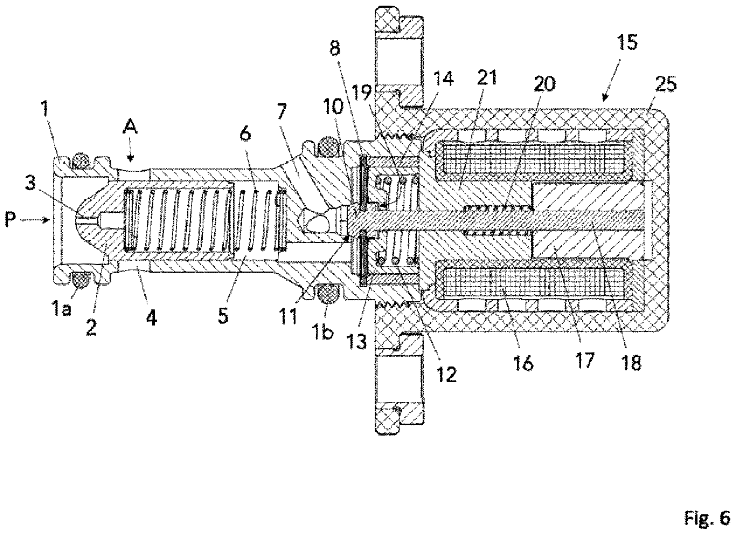

Figur 6 zeigt ein Steuerventil eines dritten Ausführungsbeispiels mit einem Hauptventil und einer Vorsteuereinrichtung. Die funktionsgleichen Komponenten sind mit den Bezugszeichen des ersten Ausführungsbeispiels versehen. Vom ersten Ausführungsbeispiel unterscheidet sich das Steuerventil im Wesentlichen dadurch, dass das Vorsteuerorgan 10 und der Stößel 18 relativ zueinander nicht beweglich, sondern als Baueinheit geformt sind. Sie können miteinander gefügt oder, wie im dritten Ausführungsbeispiel, gemeinsam urgeformt sein. Das Vorsteuerorgan 10 bildet ein axiales Ende des Stößels 18.

Die Membran 8 stützt sich an ihrer von der Steuerkammer 5 abgewandten Rückseite wie im ersten Ausführungsbeispiel an einer Stützstruktur 13 ab. Im Unterschied zum ersten Ausführungsbeispiel ist die Stützstruktur 13 an ihrem Außenumfang in einem Gleitkontakt axial hin und her beweglich geführt, während die Stützstruktur 13 des ersten Ausführungsbeispiels an einem Innenumfang im Gleitkontakt mit dem Stößel 18 des ersten Ausführungsbeispiels geführt wird. Die Führung am Außenumfang ist hinsichtlich der Kippstabilität günstig.

Wegen der festen Verbindung von Stößel 18 und Vorsteuerorgan 10 kann das Vorsteuerorgan 10 mittels der Feder 20 und des Stößels 18 auf Zug an einem Axialanschlag 19 der Stützstruktur 13 gehalten und dadurch ein Anhaften am Vorsteuerquerschnitt 11 verhindert werden. Die Feder 20 übt auf den Stößel 18 und somit auf das Vorsteuerorgan 10 eine Federkraft aus, die vom Vorsteuerquerschnitt 11 weg und in Richtung auf den Anschlag 19 gerichtet ist. Wird die Spule 16 bestromt, übt sie auf den Anker 17 eine in Richtung auf den Vorsteuerquerschnitt 11 gerichtete Kraft aus, durch die der Anker 17 und damit gemeinsam der Stößel 18 in die in Figur 6 eingenommene Aktivposition bewegt werden, in der der Stößel 18 den Vorsteuerquerschnitt 11 verschließt.

In dem in Figur 6 dargestellten Zustand ist der in der Steuerkammer 5 auf die Membran 8 wirkende Steuerdruck so groß, dass die Stützstruktur 23 eine von der Steuerkammer 5 aus gesehen rückwärtige Anschlagposition einnimmt, in der der Anschlag 19 vom Vorsteuerorgan 10 axial abgerückt ist. Wird die Spule 16 unter diesen Verhältnissen stromlos geschaltet, bewirkt die Feder 20, dass sich der Anker 17 und damit der Stößel 18 und das Vorsteuerorgan 10 in die zweite Vorsteuerposition bewegen und der Vorsteuerquerschnitt 11 freigegeben wird. Sinkt der Steuerdruck wie zum ersten Ausführungsbeispiel beschrieben unter eine vorgegebene Druckschwelle, bewegt die Feder 12 die Stützstruktur 13 und somit die Membran 8 und das Vorsteuerorgan 10 in die erste Vorsteuerposition, in der das Vorsteuerorgan 10 den Vorsteuerquerschnitt 11 verschließt, solange der Druck in der Vorsteuerkammer 5 die mittels der Feder 12 vorgegebene Druckschwelle nicht übersteigt.

Im dritten Ausführungsbeispiel ist ein Gehäuse 25 der Elektromagneteinrichtung 15 auf das Ventilgehäuse 1 geschraubt. Beim Zusammenschrauben der Gehäuse drückt die im Gehäuse 25 der Elektromagneteinrichtung 15 aufgenommene Montagestruktur 21 axial gegen die im Ventilgehäuse 1 aufgenommene Montagestruktur 14, die ihrerseits axial gegen einen äußeren Rand der Membran 8 drückt und dadurch für eine Abdichtung der Steuerkammer 5 mittels der Membran 8 sorgt. Im Unterschied zum ersten Ausführungsbeispiel dient die Montagestruktur 14 nicht nur der Befestigung der Membran 8, sondern dient auch als Axialführung für die Stützstruktur 13.

Von den erläuterten Unterschieden abgesehen, entspricht das Steuerventil des dritten Ausführungsbeispiels dem Steuerventil des ersten Ausführungsbeispiels, so dass auf die Ausführungen zum ersten Ausführungsbeispiel im Weiteren verwiesen wird.

## Patentansprüche

1. Steuerventil zur Versorgung einer oder mehrerer Kühldüsen zur Sprühkühlung einer oder mehrerer Komponenten einer Brennkraftmaschine mit einem Druckfluid, das Steuerventil umfassend:
1.1 einen Druckanschluss (P), einen Arbeitsanschluss (A) und einen primären Steuerquerschnitt (4), durch den das Druckfluid vom Druckanschluss (P) zum Arbeitsanschluss (A) strömen kann,
1.2 einen mit dem Druckfluid beaufschlagbaren Ventilkolben (2), der zur Veränderung der Größe des primären Steuerquerschnitts (4) zwischen einer Minimalflussposition, die insbesondere eine Schließposition sein kann, und einer Maximalflussposition axial hin und her beweglich ist,
1.3 eine Steuerkammer (5), die zur Erzeugung eines auf den Ventilkolben (2) axial wirkenden Steuerdrucks einen Einlass (3) und zur Verringerung des Steuerdrucks einen Auslass (7; 9) für das Druckfluid aufweist, wobei der Einlass oder der Auslass (7; 9) einen der Größe nach veränderbaren Vorsteuerquerschnitt (11) aufweist,
1.4 ein Vorsteuerorgan (10; 22), das zur Veränderung der Größe des Vorsteuerquerschnitts (11) zwischen einer ersten Vorsteuerposition und einer zweiten Vorsteuerposition hin und her beweglich ist, und
1.5 eine Elektromagneteinrichtung (15), mittels der das Vorsteuerorgan (10; 22) in die erste Vorsteuerposition, optional auch in die zweite Vorsteuerposition, bewegbar ist,
1.6 wobei der Ventilkolben (2) an einer vorderen Stirnfläche mit dem Druckfluid vom Druckanschluss (P) beaufschlagbar ist und mit einer von der vorderen Stirnfläche axial abgewandten rückwärtigen Stirnfläche die Steuerkammer (5) begrenzt, so dass die vom Druckfluid vom Druckanschluss (P) am Ventilkolben (2) erzeugbare Fluiddruckkraft der vom Steuerdruck am Ventilkolben (2) erzeugbaren Fluiddruckkraft entgegenwirkt,
1.7 und wobei ein durch den Ventilkolben (2) von einer Stirnseite des Ventilkolbens (2) bis in die Steuerkammer (5) erstreckter Verbindungskanal den Einlass (3) der Steuerkammer (5) bildet.

2. Steuerventil nach dem vorhergehenden Anspruch, wobei der Auslass (7; 9) der Steuerkammer (5) mit dem Arbeitsanschluss (A) verbunden ist, so dass das aus der Steuerkammer (5) abströmende Druckfluid über den Arbeitsanschluss (A) zu der oder den Düsen geführt wird.

3. Steuerventil nach einem der vorhergehenden Ansprüche, umfassend einen im Ventilgehäuse (1) oder an einem Außenumfang des Ventilgehäuses (1) erstreckten Verbindungskanal, vorzugsweise einen das Ventilgehäuse (1) in einem Axialabschnitt umgebenden Verbindungskanal, der den Auslass (7; 9) der Steuerkammer (5) mit dem Arbeitsanschluss (A) verbindet.

4. Steuerventil nach einem der vorhergehenden Ansprüche, umfassend eine äußere Struktur, die eine Umfangswand des Ventilgehäuses (1) ganz oder teilweise umgibt, wobei zwischen dem Ventilgehäuse (1) und der äußeren Struktur ein Verbindungskanal verbleibt, der den Auslass (7; 9) der Steuerkammer (5) mit dem Arbeitsanschluss (A) verbindet.

5. Steuerventil nach einem der vorhergehenden Ansprüche, umfassend ein Ventilgehäuse (1) mit einem axial erstreckten Gehäuseabschnitt, der den Ventilkolben (2) unter Ausbildung eines über den Umfang des Ventilkolbens (2) und axial erstreckten Dichtspalts umgibt und den primären Steuerquerschnitt (4) im Bereich des umfänglichen Dichtspalts aufweist.

6. Steuerventil nach einem der vorhergehenden Ansprüche, wobei der Ventilkolben (2) mit einer vorderen Stirnseite in Richtung auf die Minimalflussposition axial bis gegen einen Anschlag bewegbar ist, der an einem Innenumfang eines Ventilgehäuses (1) nicht umlaufend nach innen vorragt. wobei sich der Anschlag in Umfangsrichtung über weniger als 180° oder weniger als 90°, vorzugsweise weniger als 10°, erstreckt.

7. Steuerventil nach einem der vorhergehenden Ansprüche, wobei der Ventilkolben (2) ein Hohlkolben ist und sich die Steuerkammer (5) axial in den Ventilkolben (2) erstreckt.

8. Steuerventil nach einem der vorhergehenden Ansprüche, wobei die Elektromagneteinrichtung (15) eine steuerbare Spule (16) und einen Stößel (18) umfasst, der mittels der Spule (16) in eine Wirkrichtung bewegbar ist, wobei eine in die Wirkrichtung erfolgende Bewegung des Stößels (18) eine Bewegung des Vorsteuerorgans (10; 22) in die erste Vorsteuerposition bewirkt, wobei der Stößel (18) in bevorzugten Ausführungen gegen die Wirkrichtung mit der Federkraft einer Feder (20) belastet wird.

9. Steuerventil nach dem vorhergehenden Anspruch, wobei der Stößel (18) mit dem Vorsteuerorgan (10; 22) in die Wirkrichtung und/oder gegen die Wirkrichtung nur in einem Druckkontakt, vorzugsweise in direktem Druckkontakt, zusammenwirkt, oder wobei stattdessen der Stößel (18) und das Vorsteuerorgan (10; 22) miteinander unbeweglich verbunden, beispielsweise gefügt oder in einem Stück gemeinsam urgeformt, sind.

10. Steuerventil nach einem der sieben unmittelbar vorhergehenden Ansprüche, wobei die Elektromagneteinrichtung (15) einen mit der Spule (16) elektromagnetisch zusammenwirkenden, relativ zur Spule (16) in und gegen die Wirkrichtung beweglichen Anker (17) aufweist und der Stößel (18) mit dem Anker (17) unbeweglich verbunden ist.

11. Steuerventil nach einem der vorhergehenden Ansprüche, wobei der in der Steuerkammer (5) herrschende Steuerdruck in Richtung auf die Minimalflussposition und das Druckfluid vom Druckanschluss in Richtung auf die Maximalflussposition auf den Ventilkolben (2) wirken.

12. Steuerventil nach einem der vorhergehenden Ansprüche, wobei der Vorsteuerquerschnitt (11) durch die Bewegung des Vorsteuerorgans (10; 22) in die zweite Vorsteuerposition vergrößert wird.

13. Steuerventil nach einem der vorhergehenden Ansprüche, umfassend eine Ventilfeder (6) zur Erzeugung einer auf den Ventilkolben (2) axial wirkenden Federkraft, wobei die Ventilfeder (6) vorzugsweise in Richtung auf die Minimalflussposition auf den Ventilkolben (2) wirkt.

14. Steuerventil nach einem der vorhergehenden Ansprüche, umfassend eine Membran (8), die mit dem Druckfluid, vorzugsweise dem Steuerdruck, beaufschlagbar und durch die Beaufschlagung gegen eine Rückstellkraft verformbar ist, wobei das Vorsteuerorgan (10) mit der Membran (8) gekoppelt ist, so dass ein gegen die Rückstellkraft erfolgendes Verformen der Membran (8) eine Bewegung des Vorsteuerorgans (10) in Richtung auf die zweite Vorsteuerposition bewirkt.

15. Kühlsystem zur Sprühkühlung einer oder mehrerer Komponenten einer Brennkraftmaschine mit einem Kühlfluid, vorzugsweise zur Sprühkühlung eines oder mehrerer Kolben eines Verbrennungsmotors eines Kraftfahrzeugs, das Kühlsystem umfassend:
15.1 eine oder mehrere Kühldüsen zur Sprühkühlung der zu kühlenden Komponente(n),
15.2 das Steuerventil nach einem der vorhergehenden Ansprüche und
15.3 eine Abführleitung, die an den Arbeitsanschluss (A) angeschlossen und mit der einen oder den mehreren Kühldüsen verbunden ist, um das als Kühlfluid dienende Druckfluid zu der oder den Kühldüsen führen zu können,
15.4 wobei der Druckanschluss (P) vorzugsweise an ein der Schmierung der Brennkraftmaschine dienendes Schmierölsystem angeschlossen ist, um im Schmierölsystem gefördertes Schmieröl als das Kühlfluid verwenden zu können.

## Claims

1. A control valve for supplying one or more cooling nozzles, for spray-cooling one or more components of a combustion engine, with a pressure fluid, said control valve comprising:
1.1 a pressure port (P), a working port (A) and a primary control cross-section (4) through which the pressure fluid can flow from the pressure port (P) to the working port (A);
1.2 a valve piston (2) which can be charged with the pressure fluid and axially moved back and forth between a minimum flow position, which can in particular be a closing position, and a maximum flow position, in order to vary the size of the primary control cross-section (4);
1.3 a control chamber (5) which comprises an inlet (3) for the pressure fluid, for generating a control pressure which acts axially on the valve piston (2), and an outlet (7; 9) for the pressure fluid for reducing the control pressure, wherein the inlet (3) or the outlet (7; 9) exhibits a pilot cross-section (11) which is variable in terms of its size;
1.4 a pilot member (10; 22) which can be moved back and forth between a first pilot position and a second pilot position, in order to vary the size of the pilot cross-section (11); and
1.5 an electromagnetic device (15) by means of which the pilot member (10; 22) can be moved into the first pilot position and optionally into the second pilot position,
1.6 wherein the valve piston (2) can be charged with the pressure fluid from the pressure port (P) on a front end-facing surface, and a rearward end-facing surface of the valve piston facing axially away from the front end-facing surface limits the control chamber (5), such that the fluid pressure force which can be generated at the valve piston (2) by the pressure fluid from the pressure port (P) acts counter to the fluid pressure force which can be generated at the valve piston (2) by the control pressure,
1.7 and wherein a connecting channel which extends through the valve piston (2) from an end-facing side of the valve piston (2) up to and into the control chamber (5) forms the inlet (3) of the control chamber (5).

2. The control valve according to the preceding claim, wherein the outlet (7; 9) of the control chamber (5) is connected to the working port (A), such that the pressure fluid flowing off from the control chamber (5) is guided via the working port (A) to the nozzle or nozzles.

3. The control valve according to any one of the preceding claims, comprising a connecting channel which extends in a valve housing (1) or on an outer circumference of the valve housing (1) and preferably surrounds the valve housing (1) in an axial portion, and which connects the outlet (7; 9) of the control chamber (5) to the working port (A).

4. The control valve according to any one of the preceding claims, comprising an outer structure which completely or partially surrounds a circumferential wall of the valve housing (1), wherein a connecting channel which connects the outlet (7; 9) of the control chamber (5) to the working port (A) remains between the valve housing (1) and the outer structure.

5. The control valve according to any one of the preceding claims, comprising a valve housing (1) featuring an axially extending housing portion which surrounds the valve piston (2), forming a sealing gap which extends axially over the circumference of the valve piston (2), and comprises the primary control cross-section (4) in the region of the circumferential sealing gap.

6. The control valve according to any one of the preceding claims, wherein a front end-facing side of the valve piston (2) can be moved axially in the direction of the minimum flow position up to and against an abutment which does not protrude circumferentially inwards on an inner circumference of a valve housing (1), wherein the abutment extends in the circumferential direction over less than 180° or less than 90°, preferably less than 10°.

7. The control valve according to any one of the preceding claims, wherein the valve piston (2) is a hollow piston, and the control chamber (5) extends axially into the valve piston (2).

8. The control valve according to any one of the preceding claims, wherein the electromagnetic device (15) comprises a controllable coil (16) and a plunger (18) which can be moved in an effective direction by means of the coil (16), wherein moving the plunger (18) in the effective direction moves the pilot member (10; 22) into the first pilot position, wherein in preferred embodiments, the plunger (18) is loaded counter to the effective direction with the spring force of a spring (20).

9. The control valve according to the preceding claim, wherein the plunger (18) co-operates with the pilot member (10; 22) in the effective direction and/or counter to the effective direction in a pressing contact only, preferably a direct pressing contact, or wherein the plunger (18) and the pilot member (10; 22) are instead connected immovably to each other, for example joined to each other or originally moulded together in one piece.

10. The control valve according to any one of the immediately preceding seven claims, wherein the electromagnetic device (15) comprises an anchor (17) which co-operates electromagnetically with the coil (16) and can be moved relative to the coil (16) in and counter to the effective direction, and the plunger (18) is connected immovably to the anchor (17).

11. The control valve according to any one of the preceding claims, wherein the control pressure prevailing in the control chamber (5) acts on the valve piston (2) in the direction of the minimum flow position, and the pressure fluid from the pressure port (10) acts on the valve piston (2) in the direction of the maximum flow position.

12. The control valve according to any one of the preceding claims, wherein the pilot cross-section (11) is enlarged by the movement of the pilot member (10; 22) into the second pilot position.

13. The control valve according to any one of the preceding claims, comprising a valve spring (6) for generating a spring force which acts axially on the valve piston (2), wherein the valve spring (6) preferably acts on the valve piston (2) in the direction of the minimum flow position.

14. The control valve according to any one of the preceding claims, comprising a membrane (8) which can be charged with the pressure fluid, preferably the control pressure, and deformed by being charged with the pressure fluid and/or control pressure against a restoring force, wherein the pilot member (10) is coupled to the membrane (8), such that deforming the membrane (8), against the restoring force, moves the pilot member (10) in the direction of the second pilot position.

15. A cooling system for spray-cooling one or more components of a combustion engine with a cooling fluid and preferably for spray-cooling one or more pistons of an internal combustion engine of a motor vehicle, said cooling system comprising:
15.1 one or more cooling nozzles for spray-cooling the component(s) to be cooled;
15.2 the control valve according to any one of the preceding claims; and
15.3 a drainage conduit which is attached to the working port (A) and connected to the one or more cooling nozzles in order to be able to guide the pressure fluid, which serves as the cooling fluid, to the cooling nozzle or nozzles,
15.4 wherein the pressure port (P) is preferably attached to a lubricating oil system which serves to lubricate the combustion engine in order to be able to use lubricating oil, conveyed in the lubricating oil system, as the cooling fluid.

## Revendications

1. Soupape de commande pour l'alimentation d'une ou plusieurs buses de refroidissement en fluide sous pression, pour le refroidissement par pulvérisation d'un ou plusieurs composants d'un moteur à combustion, cette soupape de commande comprenant :
1.1 un raccord de pression (P), un raccord de travail (A) et une section de commande primaire (4), à travers laquelle le fluide sous pression peut s'écouler du raccord de pression (P) vers le raccord de travail (A),
1.2 un piston de soupape (2) pouvant être sollicité par le fluide sous pression, qui est mobile axialement avec un mouvement de va-et-vient entre une position de flux minimal, qui peut, plus particulièrement, être une position de fermeture, et une position de flux maximal, pour la modification de la taille de la section de commande primaire (4),
1.3 une chambre de commande (5), qui comprend, pour la production d'une pression de commande agissant axialement sur le piston de soupape (2), une entrée (3) pour le fluide sous pression et, pour la réduction de la pression de commande, une sortie (7 ; 9) pour le fluide sous pression, l'entrée (3) ou la sortie (7) présentant une section de pilotage (11) de taille variable,
1.4 un organe de pilotage (10 ; 22), qui est mobile avec un mouvement de va-et-vient entre une première position de pilotage et une deuxième position de pilotage, pour la modification de la taille de la section de pilotage (11), et
1.5 un dispositif à électro-aimant (15) au moyen duquel l'organe de pilotage (10 ; 22) peut être déplacé vers la première position de pilotage et éventuellement aussi vers la deuxième position de pilotage,
1.6 le piston de soupape (2) pouvant être sollicité par le fluide sous pression du raccord de pression (P) sur une face frontale antérieure, une face frontale arrière opposée axialement de la face frontale antérieure délimitant la chambre de commande (5), de façon à ce que la force de pression de fluide qui peut être générée par le fluide sous pression du raccord de pression (P) sur le piston de soupape (2) contrecarre la force de pression de fluide qui peut être générée par la pression de commande sur le piston de soupape (2),
1.7 et un canal de liaison s'étendant à travers le piston de soupape (2) d'une façade du piston de soupape (2) vers l'intérieur de la chambre de commande (5) et formant l'entrée (3) de la chambre de commande (5).

2. Soupape de commande selon la revendication précédente, la sortie (7 ; 9) de la chambre de commande (5) étant reliée avec le raccord de travail (A), de façon à ce que le fluide sous pression sortant de la chambre de commande (5) soit guidé par le raccord de travail (A) vers la ou les buses.

3. Soupape de commande selon l'une des revendications précédentes, comprenant un canal de liaison s'étendant dans un boîtier de soupape (1) ou sur une circonférence externe du boîtier de soupape (1), de préférence un canal de liaison entourant le boîtier de soupape (1) dans une partie axiale, par lequel la sortie (7; 9) de la chambre de commande (5) est reliée avec le raccord de travail (A).

4. Soupape de commande selon l'une des revendications précédentes, comprenant une structure extérieure qui entoure entièrement ou partiellement une paroi périphérique du boîtier de soupape (1), un canal de liaison restant entre le boîtier de soupape (1) et la structure extérieure et reliant la sortie (7 ; 9) de la chambre de commande (5) avec le raccord de travail (A).

5. Soupape de commande selon l'une des revendications précédentes, comprenant un boîtier de soupape (1) avec une partie de boîtier à extension axiale, qui entoure le piston de soupape (2) en formant un interstice d'étanchéité s'étendant axialement sur la circonférence du piston de soupape (2) et comprend la section de commande primaire (4) au niveau de l'interstice d'étanchéité circonférentiel.

6. Soupape de commande selon l'une des revendications précédentes, une face frontale antérieure du piston de soupape (2) pouvant être déplacée axialement en direction de la position de flux minimal jusqu'à une butée qui ne saillie pas circonférentiellement vers l'intérieur sur une circonférence interne d'un boîtier de soupape (1), la butée s'étendant dans la direction circonférentielle sur moins de 180° ou moins de 90°, de préférence moins de 10°.

7. Soupape de commande selon l'une des revendications précédentes, le piston de soupape (2) étant un piston creux et la chambre de commande (5) s'étendant axialement dans le piston de soupape (2).

8. Soupape de commande selon l'une des revendications précédentes, le dispositif à électro-aimant (15) comprenant une bobine contrôlable (16) et un poussoir (18) qui peut être déplacé au moyen de la bobine (16) dans une direction d'action, un déplacement dans la direction d'action du poussoir (18) provoquant un déplacement de l'organe de pilotage (10 ; 22) vers la première position de pilotage, le poussoir (18) étant chargé par la force de ressort d'un ressort (20) à l'encontre de la direction d'action dans des modes de réalisation préférés.

9. Soupape de commande selon la revendication précédente, le poussoir (18) interagissant avec l'organe de pilotage (10 ; 22) dans la direction d'action et/ou à l'encontre de la direction d'action uniquement avec un contact par pression, de préférence avec un contact direct par pression, ou au lieu de cela le poussoir (18) et l'organe de pilotage (10 ; 22) étant soit reliés entre eux de manière immobile, par exemple joints, soit moulés initialement ensemble d'un seul tenant.

10. Soupape de commande selon l'une des sept revendications immédiatement précédentes, le dispositif à électro-aimant (15) comprenant une armature (17) interagissant électromagnétiquement avec la bobine (16) et étant mobile dans la direction d'action et à l'encontre de la direction d'action, et le poussoir (18) étant relié de manière immobile avec l'armature (17).

11. Soupape de commande selon l'une des revendications précédentes, la pression de commande régnant dans la chambre de commande (5) agissant en direction de la position de flux minimal sur le piston de soupape (2), et le fluide sous pression du raccord de pression (P) agissant en direction de la position de flux maximal sur le piston de soupape (2).

12. Soupape de commande selon l'une des revendications précédentes, la section de pilotage (11) étant agrandie par le déplacement de organe de pilotage (10 ; 22) vers la deuxième position de pilotage.

13. Soupape de commande selon l'une des revendications précédentes, comprenant un ressort de soupape (6) pour la production d'une force de ressort agissant axialement sur le piston de soupape (2), le ressort de soupape (6) agissant de préférence en direction de la position de flux minimal sur le piston de soupape (2).

14. Soupape de commande selon l'une des revendications précédentes, comprenant une membrane (8) qui peut être sollicitée par le fluide sous pression, de préférence par la pression de commande, et qui peut être déformée à l'encontre d'une force de rappel par cette sollicitation, l'organe de pilotage (10) étant couplé avec la membrane (8), de façon à ce qu'une déformation de la membrane (8) à l'encontre de la force de rappel provoque un déplacement de l'organe de pilotage (10) en direction de la deuxième position de pilotage.

15. Système de refroidissement pour le refroidissement par pulvérisation d'un ou plusieurs composants d'un moteur à combustion par un fluide de refroidissement, de préférence pour le refroidissement par pulvérisation d'un ou plusieurs pistons d'un moteur à combustion interne d'un véhicule à moteur, ce système de refroidissement comprenant :
15.1 une ou plusieurs buses de refroidissement pour le refroidissement par pulvérisation du ou des composants à refroidir,
15.2 la soupape de commande selon l'une des revendications précédentes et
15.3 une conduite d'évacuation, qui est raccordée au raccord de travail (A) et reliée avec l'une ou les plusieurs buses de refroidissement, afin de pouvoir guider le fluide sous pression servant de fluide de refroidissement vers la ou les buses de refroidissement,
15.4 le raccord de pression (P) étant de préférence raccordé à un système d'huile lubrifiante servant à lubrifier le moteur à combustion afin de pouvoir employer l'huile lubrifiante fournie dans le système d'huile lubrifiante comme le fluide de refroidissement.
